# EUROPEAN PATENT APPLICATION

(11) **EP 2 487 358 A1**
(43) Date of publication of application: **15.08.2012**
(21) Application number: 09850275.0
(22) Date of filing: 09.10.2009
(51) Int. Cl.: F02M 37/22, B01D 35/30, B29C 45/03

(54) **SEAMING CAP COUPLED WITH REINFORCEMENT PLATE OF SPIN-ON FILTER**

(71) Applicant: Kim, Jang Soo, Ansan-shi, Kyeonggi-do 435-835 (KR)
(72) Inventor: Kim, Jang Soo, Ansan-shi, Kyeonggi-do 435-835 (KR)
(74) Representative: Twelmeier Mommer & Partner
(86) International application number: PCT/KR2009/005808
(87) International publication number: WO 2011/043504

(57) **Abstract**

Disclosed is a seaming cap coupled with a reinforcement plate of a spin-on filter. The seaming cap (41) includes: a central hole (41a) formed in an annular shape; a securing groove (41b) formed in an annular shape by folding the lower end of the outer periphery of the central hole (41a), with an annular packing member (42) inserted therein; a seaming coupling section (41c) protruded and folded downwards at the outer periphery of the securing groove (41b) for seam-coupling to an outer peripheral surface at the upper end of a spin-on filter housing (10); and a plurality of injection-molding object extrusion holes (41d) formed in the securing groove (41b) of the seaming cap (41) at the same intervals. An extrusion object (40e) of the reinforcement plate (40) is extruded into the securing groove (41b) to which an annular packing member (42) of the seaming cap (41) is secured, when injection-molding the reinforcement plate (40) via the injection-molding object extrusion holes (41d). According to the present invention of the above structure, the reinforcement plate is injection-molded from the plastic material and coupled with the seaming cap, so that the extrusion object is formed in the annular shape on the bottom surface in the securing groove of the seaming cap, thereby being stably coupled with the seaming cap. In addition, the seaming cap is positioned between the upper mold and the lower mold of the injection molds and the threads of a spiral hole of the reinforcement plate are formed simultaneously with the injection of the reinforcement plate, so that the coupling time between the reinforcement plate and the seaming cap is reduced, thereby increasing productivity. The reinforcement plate is produced by insert injection molding with the seaming cap, which is inserted into an injection molding machine, so as to reduce weight. The plastic injection molded object and the seaming cap may be easily separated when discarding the spin-on filter. It is possible to reuse the plastic material and employ the same as an energy source.

## Description

### Technical Field

The present invention relates to a seaming cap coupled to a reinforcement plate of a spin-on filter, and more particularly, to a seaming cap coupled to a reinforcement plate of a spin-on filter, the seaming cap being coupled by an improved method including fabrication of a reinforcement plate, which covers the top of a filter element inside a spin-on filter housing, using plastic injection molding material, thereby reducing the manufacturing cost.

### Background Art

In general, the engine of an automobile includes a number of frictional elements, and the resulting frictional resistance seriously decreases engine output. It is widely known, in order to avoid such decrease of engine output, to supply each frictional element with oil.

Supply of oil to each frictional element of the engine requires that the oil turn into a pressure fluid, which is realized by an oil pump driven by power from the engine.

The oil pump is installed on the crank case of the engine to supply oil, which is contained inside the case, to the cylinder inner wall and the piston outer wall and, through predetermined channels, to valves and opening/closing means on top of the cylinder.

The oil, which is supplied to each frictional element, carries metal powder or other alien substances, which are generated by the frictional elements, to the crank case to prevent wear of the crank case and bearings and clean the surface of the frictional elements (i.e. lubrication).

However, there is a possibility that the metal powder or alien substances, which have been moved to the crank case, may be pumped and moved again to the frictional elements while the oil pump is driving. Considering this, a spin-on filter is installed near the outlet of the oil pump to filter the metal powder or alien substances.

Such spin-on filters include oil filters, fuel filters, hydraulic filters, water filters, cooling filters, etc., which are used for internal combustion engines and for other industrial purposes.

A spin-on filter includes an element fabricated in a predetermined shape and installed in a substantially cylindrical shape and a relief valve positioned at the center of the element to prevent damage to the spin-on filter when the oil pressure exceeds a predetermined threshold and act as another channel, through which oil flows to the engine when the filter (i.e. oil pleated paper) is clogged.

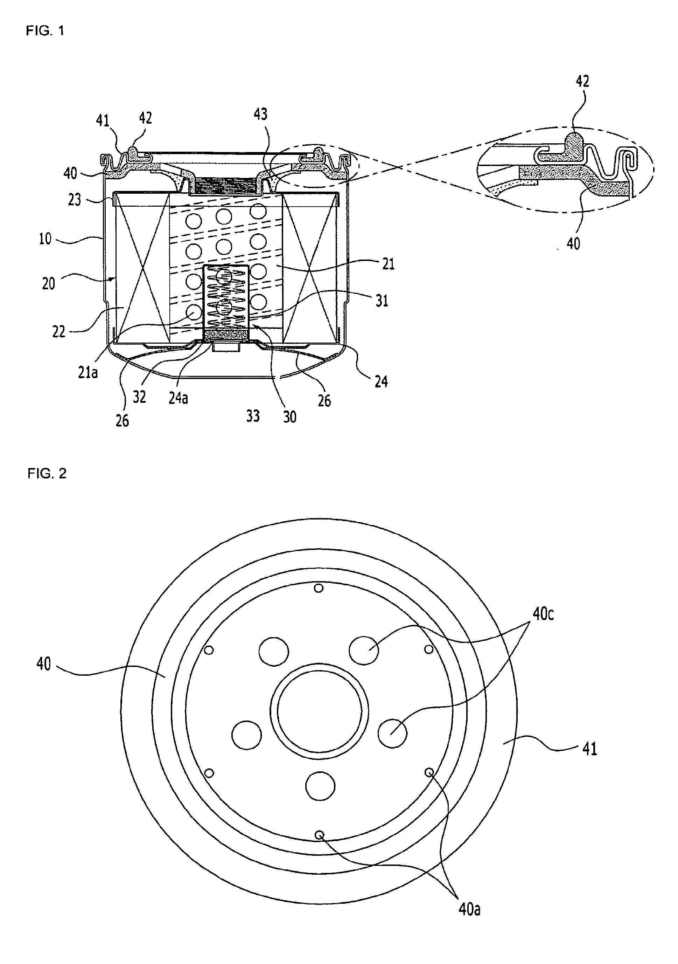

FIG. 1 is a sectional view of a conventional spin-on filter, which includes a cylindrical housing 10 having an upper opening and a filter element 20 contained in the housing 10 to filter oil.

The filter element 20 includes a core 21 having a number of oil passage holes 21a formed on the outer periphery and oil pleated paper 22 positioned on the outer periphery of the core 21 at a small distance from the inner wall of the housing 10 while retaining the shape.

A relief valve 30 is installed inside the lower portion of the core 21 and is activated, when the oil pressure rises above a predetermined threshold, to stabilize the oil flow and maintain a constant overall filter pressure.

Upper and lower ends of the filter element 20 are covered with upper and lower caps 23 and 24, respectively, so that the filter element remains forced against the outer portion of the core 21. The upper cap 23 is positioned to be pressurized by the reinforcement plate 40. The lower cap 24 is elastically supported by a plate spring 26, which is forced against the lower inner surface of the housing 10, so that the spin-on filter is tightly installed on the oil supply line.

The reinforcement plate 40 is positioned to contact the inner wall of the housing 10 and remains fixed by a seaming cap 41, which is seam-fixed to the upper outer peripheral surface of the housing 10.

Specifically, the seaming cap 41 and the housing 10 are made of a metallic material, and ends of the seaming cap 41 and the housing 10 are bent and folded so that they do not detach from, but engage each other (seaming coupling). The seaming cap 41 has a bent recess so that a packing member 42 can be seated.

The valve cap 31, which contains the relief valve 30, is fixedly installed inside the lower cap 24 by projection welding.

The relief valve 30 is configured to allow unfiltered engine oil to pass, when the oil pleated paper 22 is clogged, to prevent pressure increase. Inside the valve cap 31 are installed a valve plate 32, which is forced against the upper surface of an opening hole 24a formed at the center of the lower cap 24, and an elastic spring 33 configured to pressurize the upper surface of the valve plate 32 inside the valve cap 31.

The oil pleated paper 22 has the following structure: a predetermined thickness of thermosetting resin 22a is applied to the upper and lower caps 23 and 24, which are positioned on the upper and lower surfaces of the oil pleated paper 22, respectively, and is heated and hardened at 160-180°C for 10-20 minutes in a conveyor oven so that the upper and lower surfaces of the oil pleated paper 22 is sealed.

A process of assembling and fabricating a filter element of a conventional spin-on filter, which has the above-mentioned construction, is as follows: a valve plate 32 is positioned on the upper surface of a lower cap 24 so as to cover the opening hole 24a, and the upper surface of a valve cap 31, which contains an elastic spring 33 for pressurizing the upper surface of the valve plate 32, is welded/coupled to the upper surface of the lower cap 24. A cylindrical core 21 is installed on the upper surface of the lower cap 24 with the relief valve 30 at the center.

Cylindrical oil pleated paper 22 is positioned on the outer peripheral surface of the core 21. Thermosetting resin 22a is applied to seal the upper and lower surfaces of the oil pleated paper 22 and is heated and hardened inside a conveyor oven at 160-180°C for 10-20 minutes to be coupled to the upper and lower caps 23 and 24.

The assembled filter element 20 is assembled in the housing 10 in the following manner: a plate spring 26 is inserted between the lower surface of the housing 10, i.e. lower surface of the lower cap 24, and the inner upper surface of the housing 10; a reinforcement plate 40 is positioned on the upper surface of the upper cap 23; and a seaming cap 41 is seaming-coupled to the upper outer periphery of the housing 10 on the upper surface of the reinforcement plate 40, thereby completing the assembly process.

The spin-on filter, assembled in the above-mentioned manner, operates as follows: when engine oil passes through the inside thereof, the impurity-containing oil moves from the outer peripheral surface of the oil pleated paper 22 to the inside. The oil pleated paper 22 then filters the impurities of the oil as it passes. The filtered oil flows into the core 21 through a number of oil passage holes 21a and then delivered to respective device through chambers.

Reference numeral 43, which has not been described above, refers to a check valve.

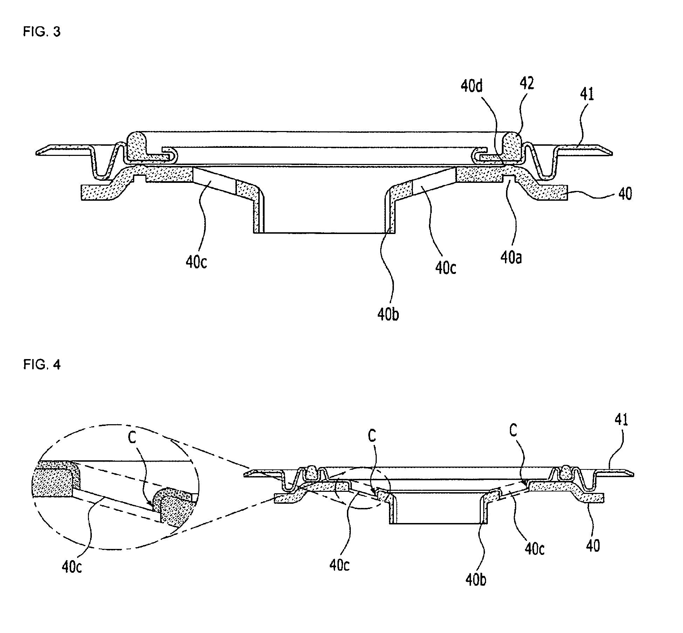

As shown in FIGs. 2 and 3, the reinforcement plate 40, which is positioned on the upper surface of the upper cap 23 of the filter element 20 of the conventional spin-on filter, is seaming-coupled to the outer peripheral edge of the upper surface of the housing 10 and to the seaming cap 41 through projection welding to the seaming cap 41 at a number of locations.

The reinforcement plate 40 and the seaming cap 41 are made of steel, and the steel-made reinforcement plate 40 is manufactured in the following manner: a number of recesses 40a for projection welding are formed radially on the lower portion of the reinforcement plate 40, and projection welding is performed through the recesses 40a to be coupled to the seaming cap 41.

Specifically, a filter element 20 is placed inside a housing 10, and a seaming cap 41, to which a reinforcement plate 20 is integrally coupled, is seamed to the upper end of the housing 10 to obtain a finished product. A screw hole 40b is formed at the center of the reinforcement plate 40 to fasten the automobile engine block and the spin-on filter, and a number of oil inflow holes 40c are arranged around the screw hole 40b.

The screw hole 40b of the reinforcement plate 40 is processed in the following manner: the reinforcement plate 40 is subjected to pressing to form a center hole and oil inflow holes 40c, and the preprocessed reinforcement plate 40 is transferred to a tapping unit, so that a tapping machine forms a screw hole 40b.

The tapping machine includes a material supply unit having a turntable, which has a number of jigs on the upper surface of the body, connected to a step motor and a switch so that it can rotate/operate step by step, a plurality of drills positioned on the top of a post, which stands upright on one side of the body, and rotated in the forward/backward direction by a motor and a reducer, and a tapping processor configured to control electric signals of the driver based on operation of the limit switch by the cam.

Therefore, the operator stands adjacent to the turntable, places a reinforcement plate 40 on each jig, and presses the switch pedal so that the turntable rotates only by a predetermined pitch interval. That is, every time the switch is pressed, the turntable rotates by a pitch.

Furthermore, every time the turntable rotates by a pitch, a reinforcement plate 40 reaches a position directly below the tapping processor, and the drill then forms a screw portion 40b at the center hole of the reinforcement plate 40. In other words, the drill begins rotating, the moment the turntable stops, and descends to form a screw hole 40b at the center of the reinforcement plate 40. The drill then rotates in the opposite direction and ascends. If the operator presses the switch again, the turntable again rotates by a pitch so that the material is positioned below the drill. This process is repeated to successively tap following reinforcement plates 40. A reinforcement plate 40, which has passed through the tapping processor, is manually separated from the jig by the operator and collected in a stacking tub.

A reinforcement plate 40, which has been processed in this manner, has radial recesses 40c formed on the lower surface by pressing and welding projections 40d formed on the upper surface of the reinforcement plate 40 for welding, in order to be coupled to the seaming cap 41.

Projection welding is conducted, while the seaming cap 41 is placed on top of the welding projections 40d, to establish bonding.

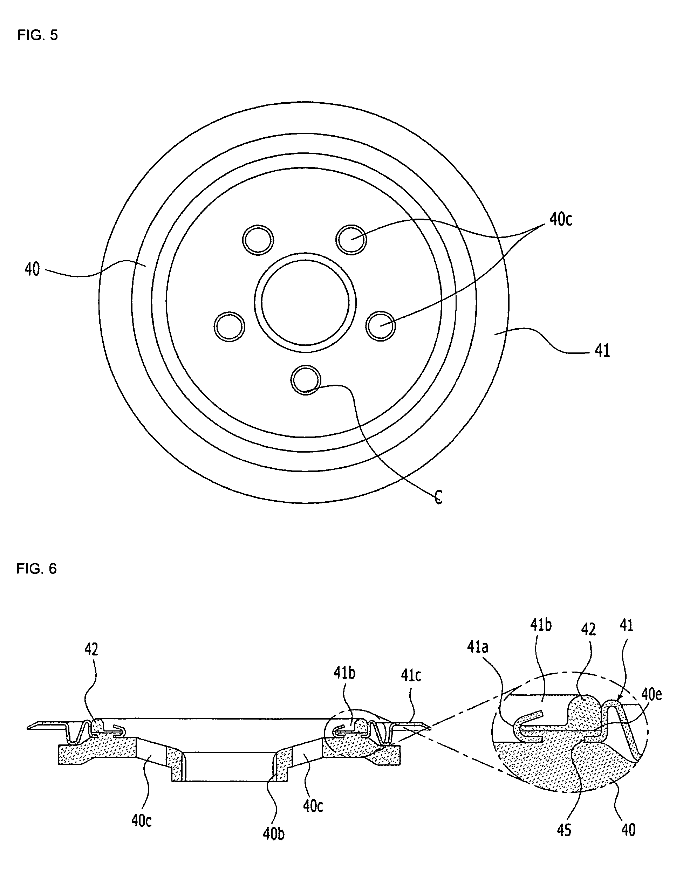

As shown in FIGs. 4 and 5, caulking C is conducted by a caulking machine on the inner peripheral surface of a number of oil inflow holes 40c of the reinforcement plate 40. Specifically, the reinforcement plate 40 is positioned above, and the seaming cap 41 is brought into contact with the reinforcement plate 40 from below. They are then placed on a caulking die of the caulking machine. The upper cylinder is used to pressurize the reinforcement plate 40 and the seaming cap 41 from above and retain them. The underlying caulking punch is raised to caulk the seaming cap 41 into the inner peripheral surfaces of a number of oil inflow holes 40c of the reinforcement plate 40, thereby bonding the reinforcement plate 40 and the seaming cap 41.

A process of coupling a reinforcement plate and a seaming cap of each of the above-mentioned two conventional types will now be described. A coupling process based on projection welding, as shown in FIGs. 2 and 3, includes the steps of: boring a center screw hole 40b of the reinforcement plate 40, which has been pressed into a circular plate; roll-forming the inner peripheral surface of the screw hole 40b by a tap processor; boring a number of oil inflow holes 40c around the outside of the center screw hole 40b; forming a number of recesses 40a, as well as corresponding welding projections 40d on the opposite side, as projection welding portions for bonding the reinforcement plate 40 and the seaming cap 41; and performing projection welding, while the reinforcement plate 40 and the seaming cap 41 are forced against each other, to bond them.

A process of coupling a reinforcement plate and a seaming cap by caulking, as shown in FIGs. 4 and 5, includes the steps of: boring a center screw hole 40b of the reinforcement plate 40, which has been pressed into a circular plate; forming threads on the inner peripheral surface of the screw hole 40b by a tap processor; boring a number of oil inflow holes 40c around the outside of the center screw hole 40b; and caulking the seaming cap 41 by a caulking punch, while the reinforcement plate 40 and the seaming cap 41 are forced against each other, into the inner peripheral surfaces of the oil inflow holes 40c to bond them.

The above-mentioned process of coupling and manufacturing a reinforcement plate and a seaming cap has the following problems: the fact that the reinforcement plate 40 is made of steel requires a series of complicated manufacturing processes, including the tapping process for roll-forming inside the center screw hole 40b of the reinforcement plate. The long manufacturing time means little throughput and a high manufacturing cost. In addition, the fact that the reinforcement plate 40 and the seaming cap 41 are coupled by a projection welding machine or a caulking machine further increases the manufacturing cost.

### Disclosure

### Technical Problem

Therefore, the present invention has been made in view of the above-mentioned problems, and an object of the present invention is to provide a seaming cap coupled to a reinforcement plate of a spin-on filter, the seaming cap being coupled by an improved method including fabrication of the reinforcement plate, which covers the top of a filter element inside a spin-on filter housing, using plastic injection molding material, thereby reducing the manufacturing cost.

### Technical solution

In accordance with a first embodiment of the present invention, there is provided a seaming cap coupled to a reinforcement plate of a spin-on filter, the seaming cap including: a center hole formed in an annular shape; a seating recess formed on an outer periphery of the center hole as an annular recess bent downwards so that an annular packing member is inserted; a seaming coupling portion formed on an outer periphery of the seating recess so as to bend and protrude downwards and configured to be seaming-coupled to an top outer peripheral surface of the spin-on filter housing; and a number of injection molding material extrusion holes formed on the seating recess of the seaming cap at an identical interval, wherein during injection molding of the reinforcement plate through the injection molding material extrusion holes, an extrusion material of the reinforcement plate is extruded onto the seating recess on which the annular packing member of the seaming cap is seated.

The extrusion material of the reinforcement plate fills on a bottom surface of the seating recess of the seaming cap in an annular shape by a predetermined thickness.

In accordance with a second embodiment of the present invention, there is provided a seaming cap coupled to a reinforcement plate of a spin-on filter, the seaming cap including: a center hole formed in an annular shape; a seating recess formed on an outer periphery of the center hole as an annular recess bent downwards so that an annular packing member is inserted; a seaming coupling portion formed on an outer periphery of the seating recess so as to bend and protrude downwards and configured to be seaming-coupled to an top outer peripheral surface of the spin-on filter housing; and acute-angle bent holes formed on a slanted surface formed between the center hole and the seating recess of the seaming cap so that the acute-angle bent holes are positioned so as to correspond to a number of oil inflow holes of the reinforcement plate and have an inner diameter gradually increasing downwards, wherein the acute-angle bent holes have bent surfaces on inner peripheral surfaces so that the reinforcement plate is injection-molded onto outer surfaces of the acute-angle bent holes, which define an acute angle with thickness portions of the seaming cap, and is prevented from decoupling from the seaming cap unless force is applied.

### Advantageous Effects

A seaming cap coupled to a reinforcement plate of a spin-on filter according to the present invention has the following advantages: a reinforcement plate is injection-molded using plastic and coupled to the seaming cap so that an extrusion material is formed in an annular shape on the bottom surface inside the seating recess of the seaming cap and firmly fastened to the seaming cap. In addition, the seaming cap is positioned between the upper and lower injection molds, and, concurrently with injection molding of a reinforcement plate, screw threads of the screw hole of the reinforcement plate are formed. This reduces time necessary to couple the reinforcement plate and the seaming cap and thus increases throughput. The fact that the reinforcement plate is manufactured by insert injection molding with the seaming cap inserted into an injection molding machine reduces the weight, makes it easy to separate the plastic injection molding material from the seaming cap when the spin-on filter is to be discarded, and enables recycling of plastic as an energy source.

### Brief Description of the Drawings

FIG. 1 is a sectional view illustrating a conventional spin-on filter;
FIG. 2 is a sectional view illustrating a conventional coupling structure of a reinforcement plate and a seaming cap;
FIG. 3 is a bottom view of the structure shown in FIG. 2;
FIG. 4 is a sectional view illustrating another conventional coupling structure of a reinforcement plate and a seaming cap;
FIG. 5 is bottom view of the structure shown in FIG. 4;
FIG. 6 is a sectional view illustrating a coupling structure of a reinforcement plate and a seaming cap according to a first embodiment of the present invention;
FIG. 7 is a top view of the structure shown in FIG. 6 prior to insertion of a packing member;
FIG. 8 is a sectional view illustrating a coupling structure of a reinforcement plate and a seaming cap according to a second embodiment of the present invention;
FIG. 9 is a bottom view of the structure shown in FIG. 8;
FIGs. 10 and 11 are sectional views illustrating a coupling structure of a reinforcement plate and a seaming cap according to a third embodiment of the present invention; and
FIGs. 12 and 13 are sectional views illustrating a coupling structure of a reinforcement plate and a seaming cap according to a fourth embodiment of the present invention.

### * Description of major reference numerals in the drawings *

10: housing
40: reinforcement plate
40c: screw holes
40e: extrusion material
41, 51: seaming cap
41a: center hole
41b: seating recess
41c: seaming coupling portion
41d: injection molding material extrusion hole
41e: acute-angle bent holes
42: packing member
51d: burring holes
51e: injection molding material extrusion burring holes
51f: slanted protruding surface
52: annular quadrangular packing member
53: annular round packing member

### Best Mode

A seaming cap coupled to a reinforcement plate of a spin-on filter according to the present invention includes: a center hole formed in an annular shape; a seating recess formed on an outer periphery of the center hole as an annular recess bent downwards so that an annular packing member is inserted; a seaming coupling portion formed on an outer periphery of the seating recess so as to bend and protrude downwards and configured to be seaming-coupled to an top outer peripheral surface of the spin-on filter housing; and a number of injection molding material extrusion holes formed on the seating recess of the seaming cap at an identical interval, wherein during injection molding of the reinforcement plate through the injection molding material extrusion holes, an extrusion material of the reinforcement plate is extruded onto the seating recess on which the annular packing member of the seaming cap is seated.

### Mode for Invention

Embodiments of the present invention will now be described in detail with reference to the accompanying drawings.

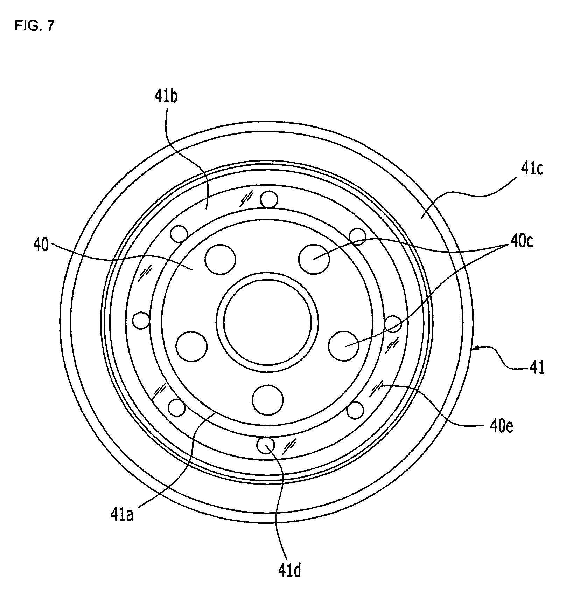

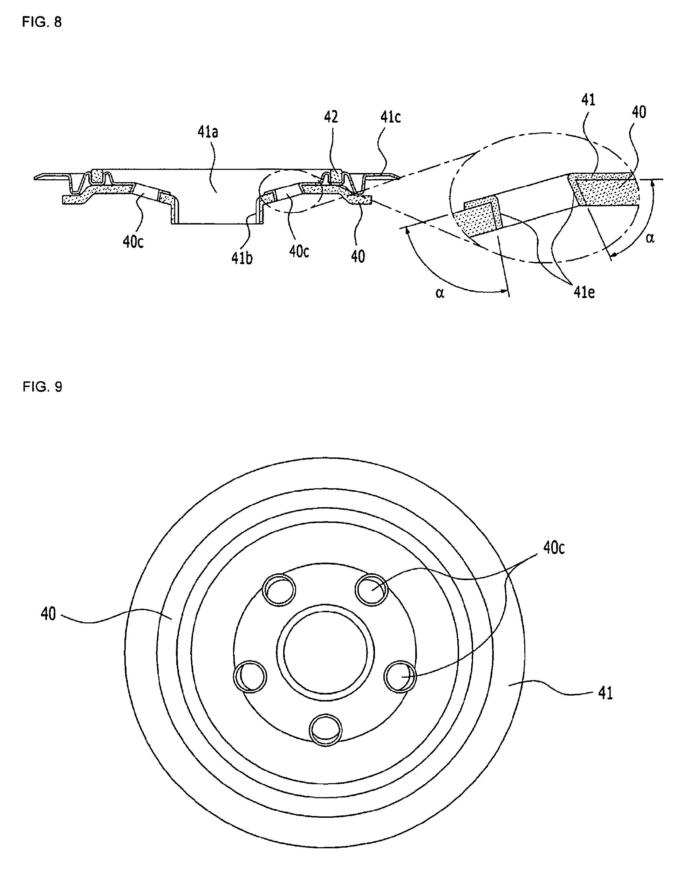

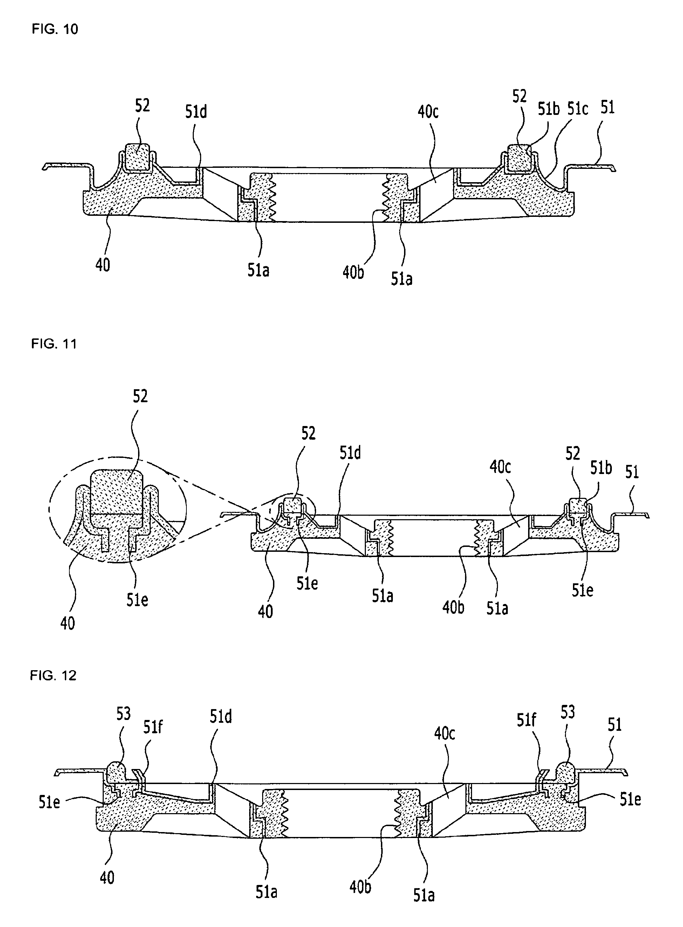

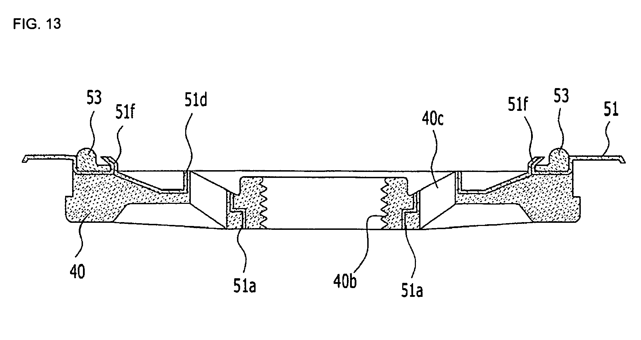

FIG. 6 is a sectional view illustrating a coupling structure of a reinforcement plate and a seaming cap according to a first embodiment of the present invention; FIG. 7 is a top view of the structure shown in FIG. 6 prior to insertion of a packing member; FIG. 8 is a sectional view illustrating a coupling structure of a reinforcement plate and a seaming cap according to a second embodiment of the present invention; FIG. 9 is a bottom view of the structure shown in FIG. 8; FIGs. 10 and 11 are sectional views illustrating a coupling structure of a reinforcement plate and a seaming cap according to a third embodiment of the present invention; and FIGs. 12 and 13 are sectional views illustrating a coupling structure of a reinforcement plate and a seaming cap according to a fourth embodiment of the present invention.

A coupling structure of a reinforcement plate and a seaming cap, as well as a coupling method thereof, according to a first embodiment of the present invention will now be described with reference to FIGs. 6 and 7.

The coupling structure of a reinforcement plate 40 and a seaming cap 41 according to the preset invention is as follows: a housing 10 of a spin-on filter and a seaming cap 41 are coupled on top of a reinforcement plate 40 by insert injection molding.

The seaming cap 41 includes a center hole 41a formed in an annular shape, a seating recess 41b formed on the outer periphery of the center hole 41a as an annular recess bent downwards so that an annular packing member 42 is inserted, and a seaming coupling portion 41c formed on the outer periphery of the seating recess 41b so as to bend and protrude downwards and adapted to be seaming-coupled to the top outer peripheral surface of the spin-on filter housing 10.

A number of injection molding material extrusion holes 41d are formed on the seating recess 41b of the seaming cap 41 at an identical interval.

The injection molding material extrusion holes 41d are formed so that, during injection molding of the reinforcement plate 40, the extrusion material 40e of the reinforcement plate 40 is extruded onto the seating recess 41b, on which the annular packing member 42 of the seaming cap 41 is seated.

The extrusion material 40e can have an increased thickness as the rigidity increases. The reinforcement plate 40 is made of a material having at least the strength of a steel reinforcement plate, preferably engineering plastic.

The extrusion material 40e of the reinforcement plate 40 fills on the bottom surface of the seating recess 41b of the seaming cap 41 in an annular shape by a predetermined thickness, thereby guaranteeing firm coupling.

A coupling structure of a reinforcement plate and a seaming cap according to a second embodiment of the present invention will now be described with reference to FIGs. 8 and 9.

The coupling structure of a reinforcement plate 40 and a seaming cap 41 according to the present invention is as follows: a housing 10 of a spin-on filter and a seaming cap 41 are coupled on top of a reinforcement plate 40 by insert injection molding.

The seaming cap 41 includes a center hole 41a formed in an annular shape, a seating recess 41b formed on the outer periphery of the center hole 41a as an annular recess bent downwards so that an annular packing member 42 is inserted, and a seaming coupling portion 41c formed on the outer periphery of the seating recess 41b so as to bend and protrude downwards and adapted to be seaming-coupled to the top outer peripheral surface of the spin-on filter housing 10.

In addition, acute-angle bent holes 41e are formed on a slanted surface, which is formed between the center hole 41a and the seating recess 41b of the seaming cap 41, and positioned to correspond to a number of oil inflow holes 40c of the reinforcement plate 40 in such a manner that the inner diameter increases gradually downwards.

In other words, acute-angle bent holes 41e are formed on a slanted surface, which is formed between the center hole 41a and the seating recess 41b of the seaming cap 41, and the outer peripheral surfaces of the acute-angle bent holes 41e are forced against the inner peripheral surfaces of the oil inflow holes 40c of the reinforcement plate 40.

Bent surfaces on the inner peripheral surfaces of the acute-angle bent holes 41e define an acute angle α with thickness portions of the seaming cap 41.

The reinforcement plate 40 is injection-molded onto the outer surfaces of the acute-angle bent holes 41e, which define an acute angle α, so that the reinforcement plate 40 is not decoupled from the seaming cap 41 unless force is applied.

As in the case of the above-mentioned coupling structure of a reinforcement plate and a seaming cap according to the first embodiment of the present invention, the seaming cap 41 is inserted into an injection molding machine, and a reinforcement plate 40 is insert-injection-molded on the bottom of the seaming cap 41 and coupled to the seaming cap 41, so that an extrusion material 40e is formed in an annular shape on the bottom surface inside the seating recess 41b of the seaming cap 41 and firmly fastened to the seaming cap 41.

In addition, the seaming cap 41 is positioned between the upper and lower injection molds, and, concurrently with injection molding of a reinforcement plate 40, screw threads of the screw hole 40b of the reinforcement plate 40 are formed. This reduces time necessary to couple the reinforcement plate 40 and the seaming cap 41 and thus increases throughput.

The fact that the reinforcement plate 40 is manufactured by insert injection molding with the seaming cap 41 inserted into an injection molding machine reduces the weight and makes it easy to separate the plastic injection molding material from the seaming cap 41 when the spin-on filter is to be discarded. This makes recycling easy and is environment-friendly. Furthermore, it can also be used to generate renewable energy.

A coupling structure of a reinforcement plate and a seaming cap, as well as a coupling method thereof, according to a third embodiment of the present invention will now be described with reference to FIGs. 10 and 11.

The coupling structure of a reinforcement plate 40 and a seaming cap 51 according to the present invention is as follows: a housing 10 of a spin-on filter and a seaming cap 51 are coupled on top of a reinforcement plate 40 by insert injection molding.

The reinforcement plate 40 includes a screw hole 40b formed at the center and a number of oil inflow holes 40c formed on the outer peripheral surface of the screw hole 40b.

The seaming cap 51 includes an inner surface 51a inserted into the reinforcement plate 50, an annular seating recess 51b formed so that an annular quadrangular packing member 52 is inserted onto its upper surface, a seaming coupling portion 51c formed on the outer periphery of the annular seating recess 51b so as to bend and protrude downwards and adapted to be seaming-coupled to the top outer peripheral surface of the spin-on filter housing 10, and burring holes 51d formed upwards to reinforce the outer peripheral surfaces of a number of oil inflow holes 50a of the reinforcement plate 50.

As shown in FIG. 6b, the seaming cap 51 has injection molding material extrusion burring holes 51e formed downwards on the lower surface of the annular seating recess 51b at an identical interval so that the injection molding material of the reinforcement plate 40 flows in.

The burring holes 51d and 51e are bored by upward or downward punching. That is, holes are bored to form burrs. Such upwardly or downwardly protruding burrs enhance the strength of the reinforcement plate 40.

A coupling structure of a reinforcement plate and a seaming cap, as well as a coupling method thereof, according to a fourth embodiment of the present invention will now be described with reference to FIGs. 12 and 13.

The seaming cap 51 according to the fourth embodiment differs from the seaming cap 51 according to the third embodiment, which uses an annular quadrangular packing member 52, in that an annular round packing member 53 is used instead. That is, a round packing member 53 is seated on the seating recess 51b, so that the inner peripheral surface protruding surface 51f of the seating recess 51a is slanted towards the round packing member 53.

### Industrial Applicability

Coupling structures of a reinforcement plate and a seaming cap, which are applied to spin-on filters for filtering engine oil of automobiles, have been described above. Such spin-on filters include oil filters, fuel filters, hydraulic filters, water filters, cooling filters, etc., which are used for internal combustion engines and for other industrial purposes.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A seaming cap coupled to a reinforcement plate of a spin-on filter, the seaming cap (41) comprising:
a center hole (41a) formed in an annular shape;
a seating recess (41b) formed on an outer periphery of the center hole (41a) as an annular recess bent downwards so that an annular packing member (42) is inserted;
a seaming coupling portion (41c) formed on an outer periphery of the seating recess (41b) so as to bend and protrude downwards and configured to be seaming-coupled to an top outer peripheral surface of the spin-on filter housing (10); and
a number of injection molding material extrusion holes (41d) formed on the seating recess (41b) of the seaming cap (41) at an identical interval, wherein
during injection molding of the reinforcement plate (40) through the injection molding material extrusion holes (41d), an extrusion material (40e) of the reinforcement plate (40) is extruded onto the seating recess (41b) on which the annular packing member (42) of the seaming cap (41) is seated.

2. The seaming cap coupled to a reinforcement plate of a spin-on filter as claimed in claim 1, wherein the extrusion material (40e) of the reinforcement plate (40) fills on a bottom surface of the seating recess (41b) of the seaming cap (41) in an annular shape by a predetermined thickness.

3. A seaming cap coupled to a reinforcement plate of a spin-on filter, the seaming cap (41) comprising:
a center hole (41a) formed in an annular shape;
a seating recess (41b) formed on an outer periphery of the center hole (41a) as an annular recess bent downwards so that an annular packing member (42) is inserted;
a seaming coupling portion (41c) formed on an outer periphery of the seating recess (41b) so as to bend and protrude downwards and configured to be seaming-coupled to an top outer peripheral surface of the spin-on filter housing (10); and
acute-angle bent holes (41e) formed on a slanted surface formed between the center hole (41a) and the seating recess (41b) of the seaming cap (41) so that the acute-angle bent holes (41e) are positioned so as to correspond to a number of oil inflow holes (40c) of the reinforcement plate (40) and have an inner diameter gradually increasing downwards, wherein
the acute-angle bent holes (41e) have bent surfaces on inner peripheral surfaces so that the reinforcement plate (40) is injection-molded onto outer surfaces of the acute-angle bent holes (41e), which define an acute angle (α) with thickness portions of the seaming cap (41), and is prevented from decoupling from the seaming cap (41) unless force is applied.

4. A seaming cap coupled to a reinforcement plate of a spin-on filter, the seaming cap (51) comprising:
an inner surface (51a) inserted into the reinforcement plate (50);
an annular seating recess (51b) formed so that an annular quadrangular packing member (52) is inserted onto its upper surface;
a seaming coupling portion (51c) formed on an outer periphery of the annular seating recess (51b) so as to bend and protrude downwards and configured to be seaming-coupled to a top outer peripheral surface of the spin-on filter housing (10); and
burring holes (51d) formed upwards to reinforce outer peripheral surfaces of a number of oil inflow holes 50a of the reinforcement plate (50).

5. A seaming cap coupled to a reinforcement plate of a spin-on filter, the seaming cap (51) comprising:
an inner surface (51a) inserted into the reinforcement plate (50);
an annular seating recess (51b) formed so that an annular round packing member (53) is inserted onto its upper surface;
a seaming coupling portion (51c) formed on an outer periphery of the annular seating recess (51b) so as to bend and protrude downwards and configured to be seaming-coupled to a top outer peripheral surface of the spin-on filter housing (10);
burring holes (51d) formed upwards to reinforce outer peripheral surfaces of a number of oil inflow holes 50a of the reinforcement plate (50); and
a protruding surface (51f) formed on an inner peripheral surface of the seating recess (51a) and slanted towards the round packing member (53).

6. The seaming cap coupled to a reinforcement plate of a spin-on filter as claimed in claim 4 or 5, wherein the seaming cap (51) further comprises injection molding material extrusion burring holes (51e) formed on a lower surface of the annular seating recess (51b) at an identical interval to protrude downwards so that an injection molding material of the reinforcement plate (40) flows in.
